# EUROPEAN PATENT SPECIFICATION

(11) **EP 1 122 483 B1**
(45) Date of publication and mention of the grant of the patent: **21.07.2004**
(21) Application number: 01200364.6
(22) Date of filing: 01.02.2001
(51) Int. Cl.: F16L 29/00, F16L 37/56, F16L 37/30

(54) **Coupling for coupling together pipe sections**
Rohrkupplung
Raccord de tuyaux

(30) Priority: 03.02.2000 NL 1014275
(43) Date of publication of application: 08.08.2001
(73) Proprietor: FLAMCO B.V., NL-2802 AC Gouda (NL)
(72) Inventor: van Beek, Maurice Adrianus Wilhelmus, 4701 AX Roosendaal (NL); Poot, Walter, 3038 CZ Rotterdam (NL); Beijersbergen van Henegouwen, Cornelis Martin, 5314 AP Bruchem (NL)
(74) Representative: Iemenschot, Johannes Andreas, Ir.

(56) References cited:
- EP-A- 0 221 231
- EP-A- 0 382 484
- US-A- 2 399 525
- US-A- 4 399 838
- US-A- 4 588 504

## Description

The invention relates to a coupling for coupling together pipe sections according to the preamble of claim 1.

Such a coupling is known from EP-A-0,382,484.

The known coupling is used in systems in which two pipes are being used to convey a thermal medium, in other words for heating or cooling. In this case a first pipe runs to, for example, a heat exchanger, and the second pipe runs away from the heat exchanger. In the case of the known coupling a non-return valve is also accommodated in each of the second ducts connecting to the female connecting parts. In the uncoupled state of the two coupling sections the ducts in the male connecting parts and the second ducts connecting to the female connecting parts are shut off towards the outside by a non-return valve. When the two coupling sections are being coupled together the non-return valves are opened automatically, so that continuous ducts are produced in the coupling.

The known coupling has the disadvantage that in the uncoupled state of the two coupling sections the ducts in the coupling sections are shut off only towards the outside by the non-return valves. The non-return valves can easily be opened from the outside, with the result that it is possible for medium present in the ducts to leak out. This can be a particular disadvantage if said medium is under pressure.

The object of the invention is to provide a coupling of the abovementioned type by means of which this disadvantage can be overcome.

This object is achieved by a coupling for coupling together pipe sections according to claim 1.

As a result of the construction of the coupling according to the invention, the ducts in the two coupling sections and the pipes connected thereto can be shut off independently of the action of the non-return valves.

US-A-4,588,504 discloses a coupling comprising two valve discs, each provided with two bores, and two retaining discs positioned between the valve discs and each provided with two bores. In the coupled state of the coupling the bores in the retaining discs are positioned opposite the bores in the valve discs. By rotation of the valve discs the bores of the valve discs are covered by the retaining discs and the coupling can be disassembled.

Preferred embodiments of the coupling according to the invention are described in the dependent claims.

The invention will be explained in greater detail below with reference to the drawing, in which:
Fig. 1 shows very diagrammatically a preferred embodiment of the coupling according to the invention in the coupled state;
Fig. 2 shows the coupling of Fig. 1 in the uncoupled state; and
Fig. 3 shows diagrammatically a practical embodiment of the coupling of Figs. 1 and 2 in the coupled state.

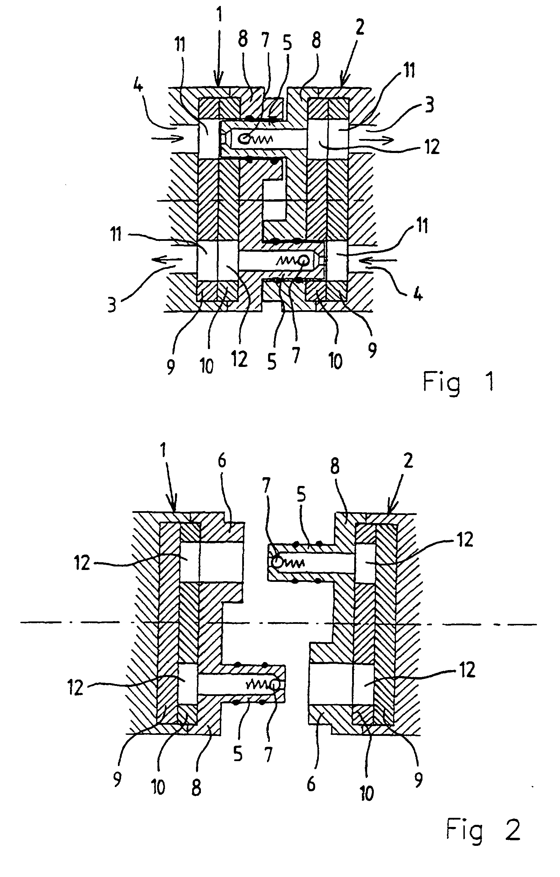

The coupling shown very diagrammatically in Figs. 1 and 2 comprises a first coupling section 1 and a second coupling section 2 that can be coupled to the first coupling section 1. The two coupling sections in Figs. 1 and 2 are essentially identical in design. Each coupling section 1, 2 is provided with a first duct 3 and a second duct 4 running parallel thereto. Each coupling section 1, 2 is further provided with a male connecting part 5 and a female connecting part 6, it being possible for the male connecting part 5 of the one coupling section to be accommodated in a mating manner in the female connecting part 6 of the other coupling section, as shown in Fig. 1. Sealing rings such as O-rings provide for the required seal here.

A spring-loaded non-return valve 7, which acts towards the free end of the male connecting part, is accommodated in the male connecting part of each coupling section 1, 2. The non-return valve 7 is designed to be opened by a medium flowing through the connecting part in question. The direction of flow of a medium in the two ducts is indicated by arrows in Fig. 1. In the uncoupled state of the two coupling sections the non-return valves 7 are closed (see Fig. 2).

The male connecting part 5 and the female connecting part 6 of each coupling section 1, 2 form an integral part of an end plate 8 on the connection side of the coupling section 1, 2 in question.

Each of the two coupling sections 1, 2 is provided with a shut-off element 9, 10 for shutting off the ducts 3, 4 in the coupling section 1, 2. The shut-off element 9, 10 consists of two discs resting against each other, a first disc 9 and a second disc 10. The first disc 9 is provided with two bores 11, situated diametrically opposite each other and in line with the two ducts 3, 4 in the coupling section. The second disc 10 is likewise provided with two bores 12, situated diametrically opposite each other. In the uncoupled state of the two coupling sections 1, 2 the bores in the one disc are covered by the other disc (see Fig. 2). In the coupled state of the two coupling sections 1, 2 the two discs 9, 10 are rotatable relative to each other, so that the bores in the one disc can be placed opposite the bores in the other disc (see Fig. 1). In Fig. 1 the bores are situated opposite each other, so that two continuous ducts are present in the coupling.

The discs 9 and 10 are preferably made of a ceramic material, but other materials suitable for these types of discs can also be used.

In the embodiment shown in Figs. 1 and 2 the second disc 10 is situated at the side of the first disc 9 facing the connection side of the coupling section in question.

In the coupled state of the two coupling sections 1, 2 (see Fig. 1) the free end part of the male connecting part of the one coupling section projects into one of the bores 12 of the second disc 10 of the other coupling section. In particular, the head end face of the male connecting part 5 coincides substantially with the contact face of the two discs 9 and 10 of the other coupling section. The construction of the coupling is further such that in the coupled state of the two coupling sections 1, 2 the two end plates 8 having thereon the mating male and female connecting parts 5 and 6 and the second discs 10 of the two coupling sections 1 and 2 are rotatable together relative to the first discs 9 that are immovably connected to the coupling sections 1 and 2.

The coupling shown in Figs. 1 and 2 is completely or virtually completely leak-free, even if the medium in the ducts 3 and 4 remains under pressure during the uncoupling of the coupling. For the uncoupling, the end plates 8 with the connecting parts 5 and 6, and the second discs 10 connected to the end plates 8 are first rotated from the position shown in Fig. 1 through, for example, 90° relative to the first discs 9, to the position shown in Fig. 2. In the position shown in Fig. 2 the ducts 3 and 4 in the two coupling sections 1 and 2 are shut off. When the discs rotate relative to each other the head end face of the male connecting part 5 of each coupling section will slide over the first disc 9 of the other coupling section. As soon as the space formed by the duct in the male connecting part 5 and the bore 12 connecting thereto in the second disc is shut off at both ends by the first discs 9, the non-return valve 7 will close, since there is no longer any pressure difference prevailing in the abovementioned space. Virtually no space remains between each non-return valve 7 and the adjacent first disc 9. The two coupling sections 1 and 2 can then be separated from each other, as indicated in Fig. 2, without medium that is present in the duct in a male connecting part 5 and the bore 12 connected thereto leaking out.

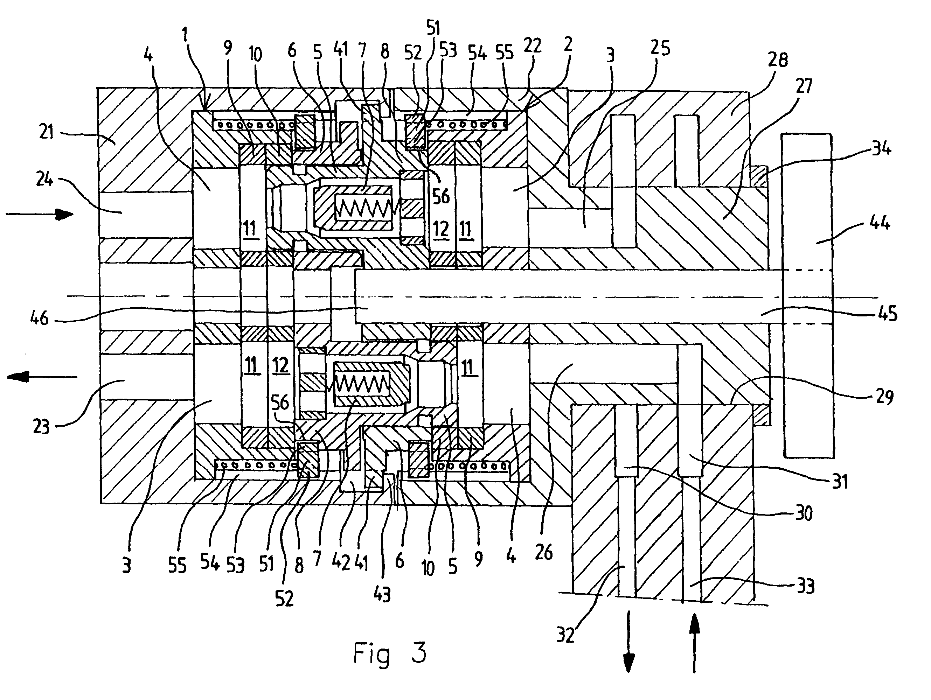

A practical embodiment of the coupling of Figs. 1 and 2 in the coupled state is shown diagrammatically in Fig. 3. In Fig. 3 corresponding parts are indicated by the same reference numerals as those in Figs. 1 and 2. The various parts may differ slightly in shape. The function and operation is, however, the same as in the case of the coupling shown in Figs. 1 and 2, so that the description appertaining to Figs. 1 and 2 is fully applicable to Fig. 3.

In the embodiment of Fig. 3 the first coupling section 1 is accommodated in a first housing 21, and the second coupling section 2 is accommodated in a second housing 22. The first housing 21 is provided with ducts 23 and 24 that connect to the ducts 3 and 4 in the first coupling section 1. The second housing 22 is provided with ducts 25 and 26 that connect to the ducts 3 and 4 in the second coupling section 2. The second housing 22 is provided with a cylindrical part 27. A connecting part 28 with a cylindrical bore 29 is fitted around this cylindrical part 27. The connecting part 28 is rotatable about the cylindrical part 27 and provides a seal thereon. The connecting part 28 is provided with two circular ducts 30 and 31 that are open towards the bore 29 and connect to the ducts 25 and 26 in the second housing 22. Ducts 32 and 33 connect to these circular ducts 30 and 31. The connecting part 28 is retained on the cylindrical part 27 by, for example, a locking ring 34.

The embodiment of the coupling according to the invention shown in Fig. 3 is provided with first locking means that are designed to ensure that in the coupled state of the two coupling sections 1 and 2, when the two discs 10 are rotated relative to their position in the uncoupled state of the coupling sections 1 and 2, the two coupling sections 1 and 2 cannot be uncoupled.

The first locking means consist of a sort of bayonet closure and comprise a number of radial projections 41 of the end plate 8 of the second coupling section 2 and a circular opening 42 in the first housing 21, which opening is bounded in the axial direction by a radially inward projecting edge 43 that is provided with openings (not shown), through which the projections 41 can move when the coupling sections 1 and 2 are inserted into each other. During the rotation of the connecting parts 5 and 6 that have been inserted into each other, the end plates 8 and the second discs 10 the projections 41 grip behind the edge 43, with the result that the two coupling sections 1 and 2 can no longer move apart.

The connecting parts 5 and 6 that have been inserted into each other and the second discs 10 can be rotated by means of a rotary knob 44 provided with a shaft 45, which near its end 46 is coupled in the direction of rotation to the end plate 8 of the second coupling section 2.

Each of the two coupling sections 1, 2 of the embodiment of the coupling according to the invention shown in Fig. 3 is further provided with second locking means that are designed to ensure that in the uncoupled state of the two coupling sections 1 and 2 the second disc 10 is not rotatable relative to the first disc 9.

The second locking means in each of the two coupling sections 1, 2 comprise a ring 51, which is provided with radial projections 52 on the outside and radial projections 53 on the inside. The ring 51 is movable in the axial direction in the housing 21 or 22, the projections 52 being slidable in longitudinal grooves 54 on the inside of the housing. Owing to the fact that the projections 52 are accommodated in the longitudinal grooves 54, the ring 51 is not rotatable relative to the housing. A spring 55 presses the ring 51 in the direction of the connection side of the coupling section 1 or 2.

In the coupled state of the two coupling sections 1, 2 the projections 53 fall into a circular groove 56 in the end plate 8, so that the end plate 8 is rotatable relative to the ring 51, and thus relative to the housing. In the uncoupled state of the two coupling sections 1, 2, in which the end plate 8 has rotated into a certain position (otherwise the two coupling sections 1, 2 cannot be coupled and uncoupled), the projections 53 fall into radial openings (not shown) situated opposite the projections 53 in the end plate 8. The spring 55 presses the ring 51 with the projections 53 into the position concerned. The end plate 8 therefore cannot be rotated relative to the housing 21 or 22, and the second disc 10 cannot be rotated relative to the first disc 9, so that the shut-off element 9, 10 keeps the ducts 3 and 4 shut off.

When the two coupling sections 1, 2 are being coupled to each other, the rings 51 in the coupling sections are forced apart by an intermediate element (not shown) fitted in one or both coupling sections, so that the rings 51 go into the position shown in Fig. 3.

The coupling according to the invention is suitable in particular for use in central heating systems. Lines (hoses) that are connected at the other end to a radiator or the like can be connected to the ducts 31 and 32. Fixed pipes of the central heating system can be connected to the ducts 23 and 24. The two housings 21 and 22 with the coupling sections 1 and 2 form, as it were, a socket and plug.

It is also possible to make a second coupling section 2 integral with a radiator or the like and to couple the second coupling section 2 to a first coupling section 1 in a fixed position (for example, fixed on a wall), so that the radiator or the like can be connected directly to a central heating system.

## Claims

1. Coupling for coupling together pipe sections, comprising a first coupling section (1) and a second coupling section (2) that can be coupled to the first coupling section and can be locked relative to the first coupling section in the direction of coupling, the two coupling sections each being provided with a first duct (3) and a second duct (4) running parallel thereto, and also comprising a male connecting part (5) having therein a duct that connects to the first duct (3), and a female connecting part (6) that connects to the second duct (4), it being possible for the male connecting part (5) of the one coupling section to be accommodated in a mating manner in the female connecting part (6) of the other coupling section, in such a way that in the coupled state of the two coupling sections (1, 2) the first and second ducts (3, 4) in the two coupling sections can form continuous ducts, and a spring-loaded non-return valve (7) being accommodated in the male connecting part (5) of each coupling section, which non-return valve (7) acts towards the free end of the male connecting part (5), **characterized in that** each of the two coupling sections is provided with a shut-off element (9, 10) for shutting off the ducts in the coupling section in question, which shut-off element is composed of two discs resting against each other, a first disc (9) which is provided with two bores (11) situated diametrically opposite each other, which bores are always in line with the two ducts (3, 4) in the coupling section, and a second disc (10) which is likewise provided with two bores (12) situated diametrically opposite each other, in the uncoupled state of the two coupling sections (1, 2) the bores in the one disc being covered by the other disc, and in the coupled state of the two coupling sections the two discs (9, 10) being rotatable relative to each other, so that the bores in the one disc can be placed opposite the bores in the other disc, the free end part of the male connecting part (5) of the one coupling section projecting into one of the bores (12) of the one (10) of the two discs of the other coupling section that is situated on the connection side the head end face of the male connecting part (5) of the one coupling section coinciding substantially with the contact face of the two discs (9, 10) of the other coupling section.

2. Coupling according to claim 1, **characterized in that** the discs (9, 10) of the shut-off element are made of a ceramic material.

3. Coupling according to claim 1 or 2, **characterized in that** the second disc (10) is situated on the side of the first disc (9) that faces the connection side of the coupling section in question.

4. Coupling according to claim 3, **characterized in that** in the coupled state of the two coupling sections (1, 2) the mating male and female connecting parts (5, 6) and the second discs (10) of the two coupling sections are rotatable together relative to the first discs (9).

5. Coupling according to one of claims 1-4, **characterized in that** the coupling is provided with first locking means (41, 43) that are designed to ensure that in the coupled state of the two coupling sections (1, 2), when the two discs (9, 10) are rotated relative to their position in the uncoupled state of the two coupling sections, the two coupling sections cannot be uncoupled.

6. Coupling according to one of claims 1-5, **characterized in that** each of the two coupling sections is provided with second locking means (51, 52, 53) that are designed to ensure that in the uncoupled state of the two coupling sections the second disc is not rotatable relative to the first disc.

7. Coupling according to one of claims 1-6, used in a central heating system.

8. Coupling according to claim 7, used in the lines running to and from a radiator or the like.

9. Coupling according to claim 8, **characterized in that** the first coupling section is integral with the radiator or the like.

## Patentansprüche

1. Kupplung zum Kuppeln von Rohrabschnitten miteinander, umfassend einen ersten Kupplungsabschnitt (1) und einen zweiten Kupplungsabschnitt (2), der mit dem ersten Kupplungsabschnitt verbunden werden kann und in Bezug auf den ersten Kupplungsabschnitt in der Kupplungsrichtung verriegelt werden kann, wobei die zwei Kupplungsabschnitte jeweils mit einem ersten Kanal (3) und einem parallel dazu verlaufenden zweiten Kanal (4) versehen sind, und auch ein Steckerverbindungsteil (5) mit einem Kanal darin, der eine Verbindung zu dem ersten Kanal (3) herstellt, und ein Buchsenverbindungsteil (6), das eine Verbindung zu dem zweiten Kanal (4) herstellt umfassen, wobei es für das Steckerverbindungsteil (5) des einen Kupplungsabschnittes möglich ist, in einer vereinenden Weise in dem Buchsenverbindungsteil (6) des anderen Kupplungsabschnittes in einer solchen Weise aufgenommen zu werden, dass in dem gekuppelten Zustand der zwei Kupplungsabschnitte (1, 2) die ersten und zweiten Kanäle (3, 4) in den zwei Kupplungsabschnitten durchgängige Kanäle ausbilden können, und wobei ein federbelastetes Rückschlagventil (7) in dem Steckerverbindungsteil (5) jedes Kupplungsabschnittes angeordnet ist, wobei dieses Rückschlagventil (7) auf das freie Ende des Steckerverbindungsteils (5) hin wirkt, **dadurch gekennzeichnet, dass** jeder von den zwei Kupplungsabschnitten mit einem Verschlusselement (9, 10) versehen ist, um die Kanäle in dem fraglichen Kupplungsabschnitt zu verschließen, wobei das Verschlusselement aus zwei aneinanderliegenden Scheiben besteht, einer ersten Scheibe (9), welche mit zwei diametral gegenüberliegend plazierten Bohrungen (11) versehen ist, wobei die Bohrungen immer in einer Linie mit den zwei Kanälen (3, 4) in dem Kupplungsabschnitt liegen, und einer zweiten Scheibe (10), welche in gleicher Weise mit zwei diametral gegenüberliegend plazierten Bohrungen (12) versehen ist, wobei in dem entkuppelten Zustand der zwei Kupplungsabschnitte (1, 2) die Bohrungen in der einen Scheibe von der anderen Scheibe abgedeckt werden, und in dem gekuppelten Zustand der zwei Kupplungsabschnitte die zwei Scheiben (9, 10) in Bezug zueinander drehbar sind, so dass die Bohrungen in der einen Scheibe den Bohrungen in der anderen Scheibe gegenüberliegend plaziert werden können, wobei das freie Endteil des Steckerverbindungsteils (5) des einen Kupplungsabschnittes in eine von den Bohrungen (12) der einen (10) von den zwei Scheiben des anderen Kupplungsabschnittes ragt, die auf der Verbindungsseite plaziert ist, und die Kopfendefläche des Steckerverbindungsteils (5) des einen Kupplungsabschnittes im Wesentlichen mit der Kontaktfläche der zwei Scheiben (9, 10) des anderen Kupplungsabschnittes zusammenfällt.

2. Kupplung nach Anspruch 1, **dadurch gekennzeichnet, dass** die Scheiben (9, 10) des Verschlusselementes aus einem keramischen Material bestehen.

3. Kupplung nach Anspruch 1 oder 2, **dadurch gekennzeichnet, dass** die zweite Scheibe (10) auf der Seite der ersten Scheibe (9) plaziert ist, die der Verbindungsseite des fraglichen Kupplungsabschnittes gegenüberliegt.

4. Kupplung nach Anspruch 3, **dadurch gekennzeichnet, dass** in dem gekuppelten Zustand der zwei Kupplungsabschnitte (1, 2) die Steck- und Buchsenverbindungsteile (5, 6) und die zweiten Scheiben (10) der zwei Kupplungsabschnitte miteinander in Bezug auf die ersten Scheiben (9) drehbar sind.

5. Kupplung nach einem der Ansprüche 1 bis 4, **dadurch gekennzeichnet, dass** die Kupplung mit einer ersten Verriegelungseinrichtung (41, 43) versehen ist, die zur Sicherstellung ausgelegt ist, dass in dem gekuppelten Zustand der zwei Kupplungsabschnitte (1, 2), wenn die zwei Scheiben (9, 10) in Bezug auf ihre Position in dem entkuppelten Zustand der zwei Kupplungsabschnitte gedreht sind, die zwei Kupplungsabschnitte nicht entkuppelt werden können.

6. Kupplung nach einem der Ansprüche 1 bis 5, **dadurch gekennzeichnet, dass** jeder von den zwei Kupplungsabschnitten mit einer zweiten Verriegelungseinrichtung (51, 52, 53) versehen ist, die zur Sicherstellung ausgelegt ist, dass in entkuppeltem Zustand der zwei Kupplungsabschnitte die zweite Scheibe nicht bezüglich der ersten Scheibe drehbar ist.

7. Kupplung nach einem der Ansprüche 1 bis 6, die in einem Zentralheizungssystem verwendet wird.

8. Kupplung nach Anspruch 7, die in den Leitungen verwendet wird, die zu und von einem Radiator oder dergleichen verlaufen.

9. Kupplung nach Anspruch 8, **dadurch gekennzeichnet, dass** der erste Kupplungsabschnitt integriert mit dem Radiator oder dergleichen ausgeführt ist.

## Revendications

1. Couplage pour coupler ensemble des sections de tuyau, comprenant une première section de couplage (1) et une seconde section de couplage (2) pouvant être couplée à la première section de couplage et pouvant être bloquée par rapport à la première section de couplage dans la direction de couplage, les deux sections de couplage étant chacune munies d'une première conduite (3) et d'une seconde conduite (4) disposées parallèlement à celles-ci, et comprenant également une partie de raccordement mâle (5) ayant dans celle-ci une conduite qui est raccordée à la première conduite (3), et une partie de raccordement femelle (6) qui est reliée à la seconde conduite (4), la partie de raccordement mâle (5) d'une section de couplage pouvant être logée d'une manière correspondante dans la partie de raccordement femelle (6) de l'autre section de couplage, de telle manière que dans l'état couplé des deux sections de couplage (1, 2) la première et la seconde conduite (3, 4) dans les deux sections de couplage peuvent former des conduites continues, et un clapet anti-retour chargé par ressort (7) étant logé dans la partie de raccordement mâle (5) de chaque section de couplage, lequel clapet anti-retour (7) agit vers l'extrémité libre de la partie de raccordement mâle (5), **caractérisé en ce que** chacune des deux sections de couplage est munie d'un élément de fermeture (9, 10) pour fermer les conduites dans la section de couplage considérée, lequel élément de fermeture est composé de deux disques reposant les uns contre les autres, un premier disque (9) qui est muni de deux orifices (11) situés de manière diamétralement opposée l'un par rapport à l'autre, lesquels orifices sont toujours alignés avec les deux conduites (3, 4) dans la section de couplage, et un second disque (10) qui est de même muni de deux orifices (12) situés de manière diamétralement opposée l'un par rapport à l'autre, dans l'état non couplé des deux sections de couplage (1, 2) les orifices dans un disque étant couverts par l'autre disque, et dans l'état couplé des deux sections de couplage les deux disques (9, 10) pouvant tourner l'un par rapport à l'autre, de sorte que les orifices dans un disque peuvent être placés en face des orifices dans l'autre disque, la partie d'extrémité libre de la partie de raccordement mâle (5) d'une section de couplage se projetant dans un des orifices (12) d'un (10) des deux disques de l'autre section de couplage qui est située sur le côté de raccordement et la face d'extrémité de tête de la partie de raccordement mâle (5) d'une section de couplage coïncidant sensiblement avec la face de contact des deux disques (9, 10) de l'autre section de couplage.

2. Couplage selon la revendication 1, **caractérisé en ce que** les disques (9, 10) de l'élément de fermeture sont constitué d'une matière céramique.

3. Couplage selon la revendication 1 ou 2, **caractérisé en ce que** le second disque (10) est situé sur le côté du premier disque (9) situé en face du côté de raccordement de la section de couplage considérée.

4. Couplage selon la revendication 3, **caractérisé en ce que** dans l'état de couplage des deux sections de couplage (1, 2) les parties de raccordement mâle et femelle correspondantes (5, 6) et les seconds disques (10) des deux sections de couplage peuvent tourner ensemble par rapport aux premiers disques (9).

5. Couplage selon l'une des revendications 1 à 4, **caractérisé en ce que** le couplage est muni de premiers moyens de blocage (41, 43) conçus pour assurer que dans l'état couplé des deux sections de couplage (1, 2), lorsque les deux disques (9, 10) sont tournés par rapport à leur position dans l'état non couplé des deux sections de couplage, les deux sections de couplage ne peuvent pas être désacouplées.

6. Couplage selon l'une des revendications 1 à 5, **caractérisé en ce que** chacune des deux sections de couplage est munie de seconds moyens de blocage (51, 52, 53) qui sont conçus pour assurer que dans l'état non couplé des deux sections de couplage on ne peut pas faire tourner le second disque par rapport au premier disque.

7. Couplage selon l'une des revendications 1 à 6, utilisé dans un système de chauffage central.

8. Couplage selon la revendication 7, utilisé dans les conduites allant vers et depuis un radiateur ou analogue.

9. Couplage selon la revendication 8, **caractérisé en ce que** la première section de couplage est intégrée au radiateur ou analogue.
